# EUROPEAN PATENT APPLICATION

(11) **EP 2 269 697 A1**
(43) Date of publication of application: **05.01.2011**
(21) Application number: 10013928.6
(22) Date of filing: 24.09.2007
(51) Int. Cl.: A62C 99/00

(54) **Training unit for use during trainings within the framework of fire fighting**

(30) Priority: 26.09.2006 NL 1032571
(62) Divisional of application: 07018691.1
(71) Applicant: Holding Haagen B.V., 5111 NB Baarle-Nassau (NL)
(72) Inventor: Haagen, Jacobus Waltherus Maria, 5111 NB Baarle-Nassau (NL); Jansen, Franciscus Josephus Anna, 2381 Weelde (BE); Severijns, Constantinus Adrianus Marie, 5111 XW Baarle-Nassau (NL)
(74) Representative: Dekker-Garms, Alwine Emilie

(57) **Abstract**

A training unit (1) has a training room (10) accessible to at least one person, a fire simulator (20) arranged in the training room (10), a flue gas exhaust duct (16), and an after-burner (18) for purifying flue gases which are released when a fire is simulated with the fire simulator (20) during a training. The advantageous application of the after-burner (18) is independent of the type of fire simulator (20), and in itself yields the advantage of a reduction of environmental pollution.

## Description

The invention relates to a training unit for use during trainings within the framework of firefighting, comprising:
- a training room accessible to at least one person;
- a fire simulator arranged in the training room;
- a duct for removing from the training room flue gases which are produced when the fire simulator lets a fire take place during operation of the training unit; and
- an after-burner for purifying exhausted flue gases.

The application of an after-burner for purifying flue gases is known per se, wherein an important advantage of such an application resides in the fact that the extent to which the environment is burdened by flue gases, i.e. the extent to which the environment is polluted by flue gases is drastically reduced. The invention now provides measures to also reduce burdening of the environment involved in trainings in the framework of fire fighting such as fire drills in which fire simulation takes place.

In a practical embodiment of the training unit having the fire simulator and the after-burner, the after-burner is located in the duct which serves to remove flue gases from the training room. In this way, it is ensured that all flue gases may be treated by the after-burner, and that only purified flue gases are eventually blown out in the open air. Preferably, means such as a ventilator are provided for forced exhausting of flue gases out of the training room, so that an effective operation of the after-burner may be guaranteed. In this way, it is achieved that the fire simulation takes place in a way which is sensible in view of the environment.

In respect of the fire simulator, it is noted that this component of the training unit is known in practice, and serves for providing fire with the objective of approximating a real fire as well as possible. Usually, a device for monitoring and controlling the fire and a number of environment variables is also provided.

In many cases, a gas-fired fire simulator is utilized for controlling the fire and the heat emission, and for guaranteeing a relatively clean combustion, so that emissions are as low as possible, and the fire produces as little as possible trouble for the direct environment. Another possibility is utilizing a wood-fired fire simulator. In such a fire simulator, solid substances like wood blocks or pallets are lit and burnt, by means of which a realistic fire is obtained, so that a training in which the fire simulator is applied provides an actual experience of the conditions of common practical situations in fire fighting.

Yet another type of fire simulator is a simulator comprising a basket which is destined for accommodating a combustible solid substance, and a burner which is positioned underneath the basket. Such a fire simulator may also have an integrated fire extinguishing system, which serves for transporting fire extinguishing agent such as water, and which comprises openings for letting out the fire extinguishing agent in the basket, so that fires may be very well controllable. Also, the basket may be provided with a compartmentalization to complicate the fire extinguishing process, and thereby enhance the educational effect which is obtained by applying the fire simulator.

In a practical embodiment of the training unit according to the invention, the training room is sufficiently large to allow for a realistic exercise. Also, insulation is applied to walls and ceiling of the training room in order to withstand the high temperatures which are occurring. The training room is provided with at least one entrance door and a possibility for supplying fresh air, whether or not closeable. Besides, the training room is provided with an exhaust for flue gases. Preferably, the training room comprises a lowered ceiling which is located above the fire simulator, wherein the flue gas exhaust duct is located above this lowered ceiling. In this way, it is achieved that the flue gases are capable of spreading in the training room, prior to being exhausted. In that situation, a so-called smoke blanket is obtained against the lowered ceiling. This is advantageous, because the smoke development and the spread of smoke in the training room are essential for a good training.

The flue gas exhaust duct is manufactured from a heat-resistant material, wherein the dimension of the duct, in particular the dimension of a cross-section of the duct, is determined in dependence on a desired exhaust capacity.

Preferably, the training unit according to the invention comprises a central control, which, among other things, takes care of control of the temperature prevailing in the training room by ventilation control, automatic fire extinguishing in exceeding of a determined maximum temperature, activating of the after-burner and release of the training unit after a check whether all requirements are met.

Within the framework of the invention, it is possible that the training unit is realized as a mobile unit, which may be built in a suitable means of transport such as a container or trailer.

The invention will be further explained on the basis of the following description of the invention with reference to the drawing, in which:
figure 1 diagrammatically shows a training unit according to the invention; and
figure 2 shows a perspective view of a fire simulator which is part of the training unit according to the invention shown in figure 1.

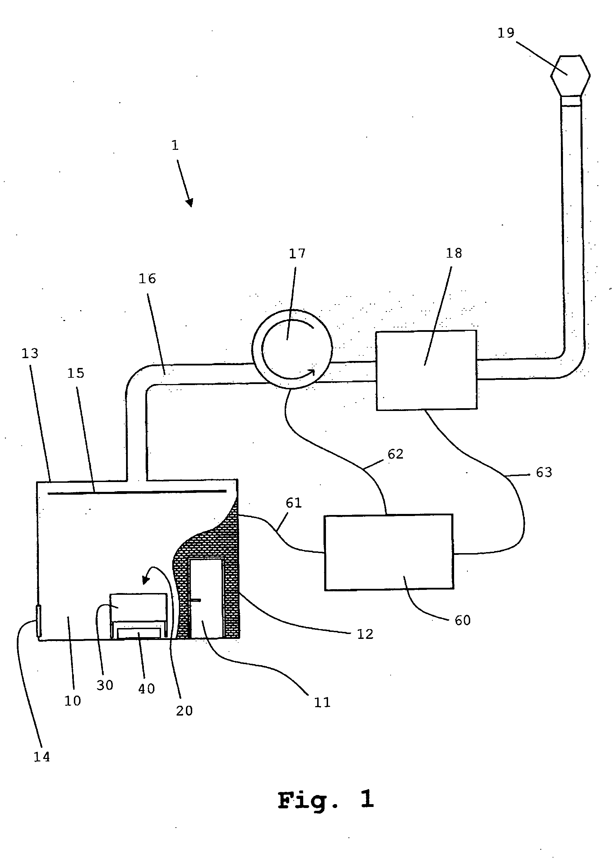

Figure 1 diagrammatically shows a training unit 1 according to the invention. The training unit 1 is intended to be used for the purpose of trainings which are held within the framework of fire fighting.

The training unit 1 comprises a training room 10 in which a fire simulator 20 is arranged, and which is so large that at least one participant of a fire fighting training is allowed to move around at least a portion of the fire simulator 20, so that it is possible to have a realistic exercise. In the shown example, the training room 10 is accessible through a door 11. Upright walls 12 of the training room 10 are covered with, or manufactured from heat-resistant material. The ceiling 13 of the training room 10 is preferably insulated, wherein heat-resistant material is applied underneath the insulation. In a wall 12 of the training room 10, a controllable air grate 14 is located to supply more or less air to the training room 10. Furthermore, the training room 10 is provided with a drain (not shown) for fire extinguishing water.

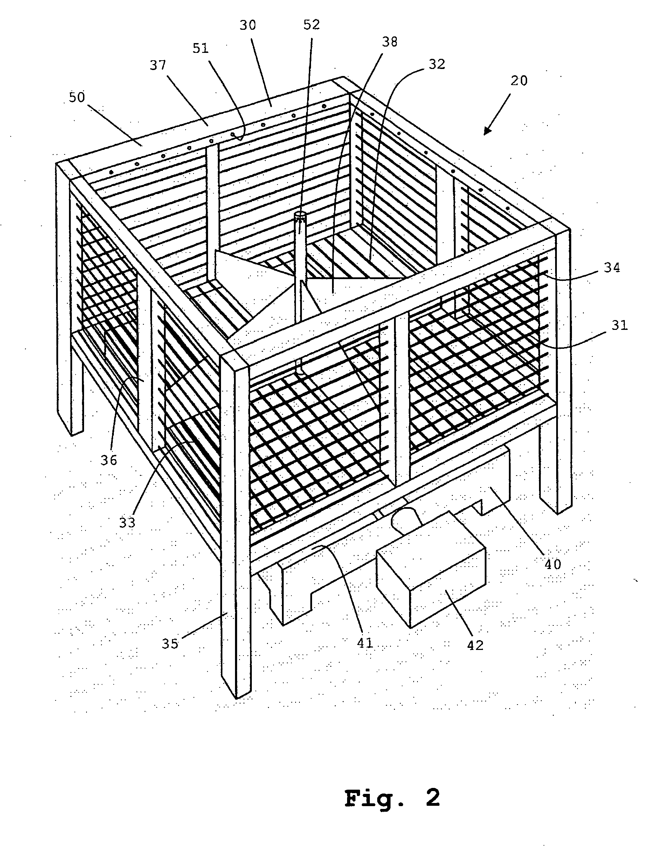

The fire simulator 20 serves to imitate a fire in the training room 10, wherein fire is actually made, which needs to be extinguished by a participant of the training. An example of a fire simulator 20 is shown in detail in figure 2. In particular, this fire simulator 20 comprises a basket 30 and a main burner 40. The basket 30 is preferably manufactured from steel, and has an open top side and a square circumference, wherein grids 33 having a number of parallel grid bars 34 are arranged in each of the walls 31 and the bottom 32 of the basket 30. It is not necessary that the basket 30 is provided with grids 33, but in view of things like the supply of oxygen to a fire in the basket 30 and the possibility of extinguishing the fire from various sides, this is advantageous. When the basket 30 comprises grids 33, these may be realized in any suitable way, wherein it is not necessary that the grids 33 are having parallel grid bars 34. It is also not necessary that all walls 31 of the basket 30 are provided with grids 33.

The basket 30 rests on the ground through four uprights 35, wherein the bottom 32 of the basket 30 is located at a certain distance above the ground. The main burner 40 is positioned underneath the bottom 32 of the basket 30. Preferably, the main burner 40 comprises a water-filled tray 41 in which a combustible gas is led, as shown. Such a tray 41 is known per se, and when the combustible gas is supplied and lit, a gas fire is realized in the tray 41, on the water. The gas that is used in the main burner 40 may be fluid or gaseous propane, LPG, or another suitable combustible gas.

The main burner 40 may comprise any suitable type of burner, and the main burner 40 can be fired on the basis of any suitable type of fuel. Examples of suitable fuel are petrol, special boiling point spirit, domestic fuel oil, and kerosene.

For the purpose of lighting the main burner 40, a pilot burner 42 is provided, which is realized as a unit having a burner, electric firing and ionization flame monitoring, for example. Furthermore, the pilot burner 42 has its own ventilator for the necessary supply of air. In view of safety, it is preferred when a control of the fuel supply to the main burner 40 is provided, wherein this control is aimed at only allowing the supply of fuel to the main burner 40 when the pilot burner 42 has a flame.

The basket 30 has an integrated fire extinguishing system 50. In the shown example, bars which are part of a frame 36 of the basket 30, including the uprights 35, are realized as hollow tubes. As a result, a system 50 is obtained, which may be flowed through by fire extinguishing water. In frame bars 37 which are located at the top side of the basket 30, spray openings 51 are arranged, so that fire extinguishing water may be sprayed in the basket 30 when the fire extinguishing system 50 is activated and fire extinguishing water is supplied to the fire extinguishing system 50. The fire extinguishing system 50 also comprises a hollow pipe 52 which is located in the centre of the basket 30, and which has spray openings 51 at a top side. By having the application of the pipe 52, it is achieved that during a fire extinguishing action, fire extinguishing water is not only sprayed from a circumference of the basket 30 to the centre, but that fire extinguishing water is also supplied from the centre of the basket 30.

The fire simulator 20 is particularly suitable for simulating a solid substances fire. When the basket 30 is used to this end, the basket 30 is filled with a suitable combustible solid substance, for example, wood. The basket 30 may even be applied for burning poisonous substances, for example, impregnated wood. With the help of the main burner 40, the combustible substance which is located inside the basket 30, may be lit quickly. When a fire extinguishing action has taken place, the main burner 40 can also be applied to dry the combustible substance.

If desired or necessary, the fire extinguishing system 50 may be used to extinguish a fire in the basket 30. It is advantageous when the supply of water to the fire extinguishing system 50 can be remotely controlled, so that in dangerous situations in which the basket 30 can not be approached, for example when the fire in the basket 30 gets too big or too hot, the fire extinguishing system 50 still may be activated. If so desired, fire extinguishing detection means may be added to the basket 30, which serve to detect if one or more parameters of a fire get outside of allowable limits, whereby it becomes possible to control fires in the basket 30 by automatically activating the fire extinguishing system 50.

On the basis of the presence of the fire extinguishing system 50, the safety of the application of the fire simulator 20 according to the invention is enhanced. By incorporating the fire extinguishing system 50 in the frame 36 of the basket 30, it is achieved that the fire extinguishing system 50 is practically invisible and is not in the way, so that hinder to fires in the basket 30 and fire extinguishing actions from the outside does not occur. Moreover, in this way, a very robust realization of the fire extinguishing system 50 is obtained.

Preferably, a number of partitions 38 as shown in figure 2 are placed at the bottom 32 of the basket 30, so that the basket 30 is more or less divided in a number of compartments. In the shown example, the basket 30 is provided with four partitions 38, which does not alter the fact that the number of partitions 38 may also be more or less. In figure 2, it can be seen that the partitions 38 are less high than the walls 31 of the basket 30. By the presence of the partitions 38, a fire extinguishing action is complicated, as a result of which the training of persons performing the fire extinguishing action gets more effective.

The basket 30 may have another shape than is shown in figure 2 and is described on the basis of that figure. For example, it is not necessary that the basket 30 has a square circumference. When having another shape, the basket 30 may as well be capable of accommodating its combustible solid substance. In view thereof, the shape of the circumference of the basket 30 may for example also be rectangular, round, triangular or multi-angular. When the basket 30 is provided with uprights 35, it is not necessary that the number thereof is four; the number of uprights 35 may also be three, five or more, for example.

As shown in figure 1, the training room 10 has a lowered ceiling 15, and the fire simulator 20 is arranged underneath it. The lowered ceiling 15 has a steel constructing with steel sheets, so that it is suitable for accumulating heat. Preferably, the ceiling 15 does not contact the walls 12 of the training room 10.

By the application of the false ceiling 15, it is possible to remove flue gases in an indirect way. For the purpose of the flue gas removal, a flue gas exhaust duct 16 and a ventilator 17 are provided, wherein an entrance of the flue gas exhaust duct 16 is located above the lowered ceiling 15. When the ventilator 17 is activated, the flue gas removal takes place in a forced way. Preferably, the ventilator 17 is controllable, so that the extent of removal can be adapted to actual circumstances in the training room 10.

In the flue gas exhaust duct 16, an after-burner 18 is also arranged, which serves for purifying the flue gases. The after-burner 18 may have its own control, and may function in a thermal, catalytic or other way.

An exit of the flue gas exhaust duct 16 is provided with a deflector cap 19. At the position of the deflector cap 19, purified flue gases are blown into the open air. The deflector cap 19 is preferably located at a large height, because the gases may be hot, and it is prevented in this way that people may get in contact with these gases.

The training unit 1 has a central control 60, which is diagrammatically depicted in figure 1 as a block, wherein a communication line 61 between the central control 60 and the training room 10 is depicted as well, in general. Furthermore, a communication line 62 between the central control 60 and the ventilator 17, and a communication line 63 between the central control 60 and the after-burner 18 are depicted. Through the first communication line 62, the central control 60 may control the operation of the ventilator 17 on the basis of detected temperature and pressure in the training room 10, for example, whereas the central control 60 is coupled to the control of the after-burner 18 through the second communication line 63.

Within the framework of the invention, the central control 60 may have various functions. Preferably, temperature readers (not shown) are arranged at various places in the training room. On the basis of input of these temperature readers, the central control 60 is capable of monitoring the room temperature, and of possibly starting a fire extinguishing action in order to guarantee the safety in the training room 10. Further, the central control 60 may be used for performing functions like checking various conditions of the training unit 1 and indicating whether the training unit 1 is ready for being used, checking the operation of the main burner 40 and the pilot burner 42, and activating the fire extinguishing system 50 of the basket 30 in the case of exceeding of a maximum allowable temperature. Further, for safety reasons, it is advantageous when the central control 60 comprises a emergency stop provision, which is adapted to shut off the main burner 40 in emergency cases, and to bring the ventilation in the training room 10 to a maximum level by controlling the operation of the air grate 14 and the ventilator 17.

It will be clear to a person skilled in the art that the scope of the invention is not limited to the examples discussed above, but that several amendments and modifications thereof are possible without deviating from the scope of the invention as defined in the appended claims.

In general, the invention provides a training unit 1 having a training room 10, a fire simulator 20 arranged in the training room 10, a flue gas exhaust duct 16, and an after-burner 18 for purifying flue gases which are released when a fire is simulated with the fire simulator 20 during a training. The advantageous application of the after-burner 18 is independent of the type of fire simulator 20, and in itself yields the advantage of a reduction of environmental pollution.

## Claims

1. Training unit (1) for use during trainings within the framework of fire fighting, comprising:
- a training room (10) accessible to at least one person;
- a fire simulator (20) arranged in the training room (10);
- a duct (16) for removing from the training room (10) flue gases which are produced when the fire simulator (20) lets a fire take place during operation of the training unit (1); and
- an after-burner (18) for purifying exhausted flue gases.

2. Training unit (1) according to claim 1, wherein the after-burner (18) is located in the flue gas exhaust duct (16).

3. Training unit (1) according to claim 1 or 2, further comprising a lowered ceiling (15) which is located above the fire simulator (20), wherein the flue gas exhaust duct (16) is located above this lowered ceiling (15).

4. Training unit (1) according to any of claims 1-3, further comprising means (17) for the forced removal of flue gases from the training room (10).

5. Training unit (1) according to any of claims 1-4, which is realized as a mobile unit, and which may be built in a suitable means of transport.
